# EUROPEAN PATENT APPLICATION

(11) **EP 1 441 513 A2**
(43) Date of publication of application: **28.07.2004**
(21) Application number: 04001077.9
(22) Date of filing: 20.01.2004
(51) Int. Cl.: H04N 5/46

(54) **Method and apparatus for setting a signal processing mode for reproduction of signals in a disc apparatus**

(30) Priority: 24.01.2003 KR 2003004927
(71) Applicant: LG ELECTRONICS INC., Seoul 150-010 (KR)
(72) Inventor: Gim, Seong Do, Pyungtaek-si Kyunggi-do, 459-756 (KR)
(74) Representative: VOSSIUS & PARTNER

(57) **Abstract**

A method and apparatus are provided for automatically setting a signal processing mode for reproduction of video signals read from a disc, such as an optical disc, to a selected signal processing mode, such as one of, for example, NTSC and PAL modes, in a disc apparatus, such as an optical disc apparatus, for example, a DVD player, internally equipped with a tuner adapted to receive broadcast signals. In accordance with the method and apparatus, it is possible to automatically set the signal processing mode for reproduction of video signals in a disc apparatus, by referring to video mode set data stored in the disc apparatus and a type of broadcast signals received through a receiver unit, such as a tuner, such that the signal processing mode corresponds to the mode of a display device, such as an external monitor or TV, connected to the disc apparatus. Accordingly, it is unnecessary for the user to manually set the signal processing mode of the disc apparatus (Fig. 1).

## Description

The invention relates to a method and apparatus for setting a signal processing mode for reproduction of signals in a disc apparatus.

Recently, discs, such as optical discs, for example DVDs, have been developed which can store a large quantity of high-quality video and audio data. In association with the same, disc apparatuses, such as DVD players or DVD recorders, have also been developed and made commercially available, in order to reproduce, for example, video and audio data on a disc or to record such data on a disc.

Such a disc apparatus, referring for example, to a DVD player, operates to read a data stream recorded on, for example, a DVD, to decode the read data stream, thereby recovering original video and audio signals, to D/A-convert the recovered original video and audio signals, and then to output the resultant video and audio signals through a display, such as a general TV, in the form of video and audio. Accordingly, the user can view and hear video and audio data recorded on, for example, a DVD, through a display, such as a general TV.

Recently, for example, disc apparatuses having a multi-function, such as a DVD player internally equipped with a tuner for receiving TV broadcast signals, have been developed. In such a multi-function type disc apparatus, video mode set data is stored in a non-volatile memory equipped in the apparatus, in order to set the signal processing mode for video signals read from a disc to a selected one of NTSC or PAL modes.

In an initial system operation thereof, the multi-function type disc apparatus identifies the video mode set data stored in its non-volatile memory, and sets the signal processing mode for reproduction of video signals to a selected one of NTSC and PAL modes, based on the identified video mode set data, and reproduces A/V data read from a disc in the set signal processing mode.

However, where the mode of an external monitor or TV connected to a disc apparatus having a tuner, as described above, is different from that of the disc apparatus for reproduction of video signals, for example, where the disc apparatus is set to operate in the NTSC mode, whereas the external monitor or TV is set to operate in the PAL mode, it is impossible to normally display reproduced video signals. Furthermore, in order to avoid such a problem, the user has to manually set the signal processing mode of the disc apparatus in accordance with the mode of the external monitor or TV.

An object of the invention is to solve at least the above problems and/or disadvantages and to provide at least the advantages described hereinafter.

In order to achieve at least the above objects in whole or in part and in accordance with the purposes of the invention, as embodied and broadly described, there is provided a method for setting a signal processing mode for reproduction of signals in a disc apparatus equipped with a tuner comprising detecting the type of a broadcast signal received through the tuner, comparing the detected broadcast signal type with mode set data stored in the disc apparatus to determine whether the detected broadcast signal type corresponds to the mode set data; and setting the signal processing mode of the disc apparatus to a signal processing mode based on the result of the comparison.

To further achieve at least the above objects in whole or in part and in accordance with the purposes of the invention, as embodied and broadly described, there is provided apparatus for setting a video signal processing mode for reproduction of video signals in a disc apparatus equipped with a tuner comprising means for detecting the type of a broadcast signal received through the tuner, means for comparing the detected broadcast signal type with video mode set data stored in the disc apparatus to determine whether the detected broadcast signal type corresponds to the video mode set data, and means for setting the signal processing mode of the disc apparatus to a video signal processing mode based on the result of the comparison.

To further achieve at least the above objects in whole or in part and in accordance with the purposes of the invention, as embodied and broadly described, there is provided a disc apparatus comprising a receiver unit configured to receive a broadcast signal, a processing unit configured to process the signal received by the receiver unit, a reproduction unit configured to reproduce the signal, wherein the processing unit is further configured to detect a type of the broadcast signal received through the tuner, compare the detected broadcast signal type with stored mode set data to determine whether the detected broadcast signal type corresponds to the mode set data, and set the signal processing mode of the disc apparatus to a signal processing mode based on the result of the comparison.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

### BRIEF DESCRIPTION OF THE DRAWINGS

The invention will be described in detail with reference to the following drawings in which like reference numerals refer to like elements wherein:

FIG. 1 is a schematic block diagram of an optical disc apparatus equipped with a tuner in accordance with an embodiment of the invention;

FIG. 2 is a flow chart of a method for setting a signal processing mode in a disc apparatus in accordance with an embodiment of the invention; and

FIG. 3 is a flow chart of a method for setting a signal processing mode in a disc apparatus in accordance with another embodiment of the invention.

### DETAILED DESCRIPTION OF PREFERRED EMBODIMENTS

Now, embodiments of a method and apparatus for setting a signal processing mode for reproduction of signals in a disc apparatus in accordance with the invention will be described.

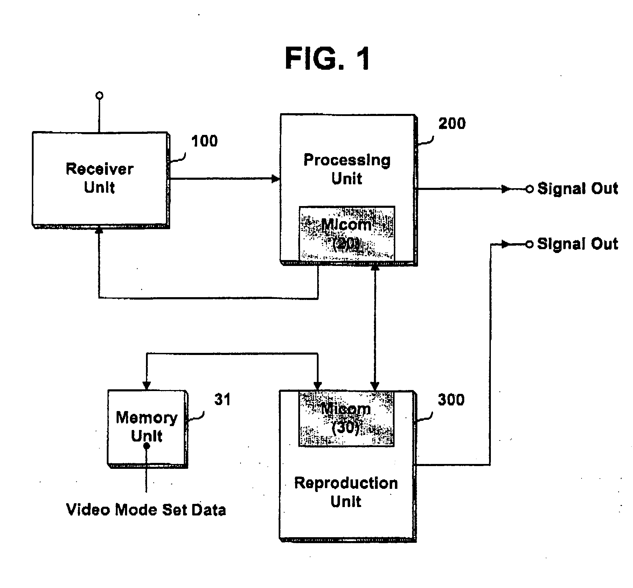

FIG. 1 is a schematic block diagram of a disc apparatus according to an embodiment of the invention. The invention is described with reference to an optical disc apparatus equipped with a receiver unit, such as a tuner; however, the method and apparatus according to embodiments of the invention may be applied in other types of disc apparatus.

As shown in FIG. 1, an optical disc apparatus 10 includes a receiver unit 100, a processing unit 200, and a reproduction unit 300. The processing unit 200 and reproduction unit 300 may include microcomputers 20 and 30, respectively. The optical disc apparatus 20 may be, for example, a multi-function type DVD player internally equipped with a tuner. In such a configuration, the receiver unit 100, processing unit 200, and reproduction unit 300 would correspond to a tuner, video board, and DVD player unit.

The optical disc apparatus 10 may include a memory unit 31, such as a non-volatile memory, for example, an EEPROM, configured to store, for example, video mode set data adapted to set the signal processing mode for reproduction of, for example, video to a selected one of, for example, NTSC and PAL modes.

In the embodiment where the microcomputer 30 is included in the reproduction unit 300, the microcomputer 30 operates to set the signal processing mode for video signals read from an optical disc, such as a DVD, to, for example, an NTSC or PAL mode corresponding to the mode of a display, such as an external monitor or TV, connected to the optical disc apparatus, by referring to the type of broadcast signal received through the receiver unit 100 and the video mode set data stored in the memory unit 31. The operation of such an optical disc apparatus will be described in detail, hereinafter.

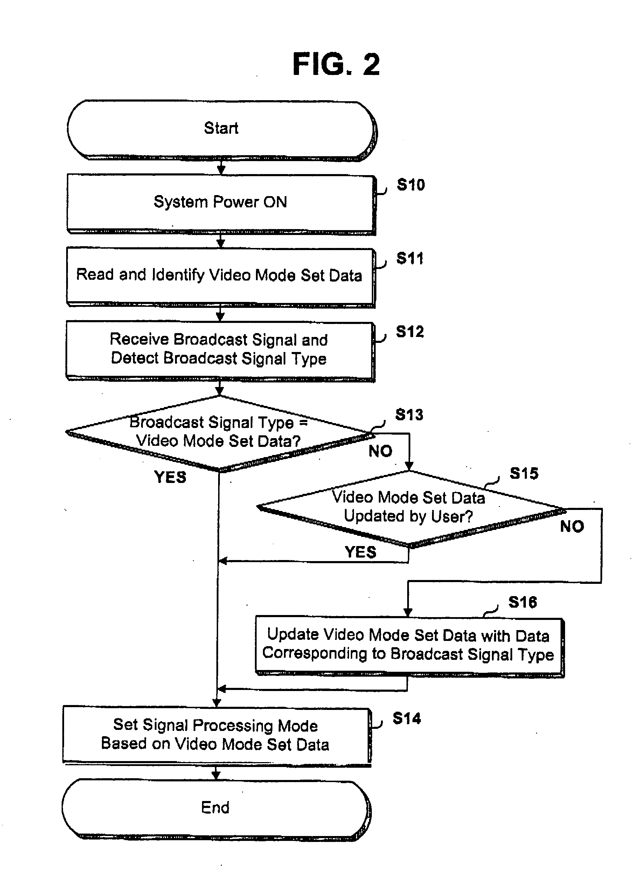

FIG. 2 is a flow chart of a method for setting a signal processing mode in accordance with an embodiment of the invention. The method is disclosed as implemented in an apparatus as shown in Figure 1; however, the method may be implemented in other apparatus.

In accordance with this method, when the optical disc apparatus 10, for example, a tuner-equipped DVD player, turns on, in step S10, the reproduction unit 300, or the microcomputer 30 included in the reproduction unit 300, reads and identifies the video mode set data stored in the memory unit 31, in step S11.

The processing unit 200, or the microcomputer 20 included in the processing unit 200, controls the receiver unit 100 to receive a broadcast signal, such as a TV broadcast signal, and detects whether the type of the received broadcast signal corresponds to, for example, an NTSC type or a PAL type, in step S12. That is, the processing unit 200, or the microcomputer 20 included in the processing unit 200, indirectly determines whether the mode of the display device, such as an external monitor or TV connected to the optical disc apparatus, corresponds to, for example, an NTSC mode or a PAL mode.

Meanwhile, the reproduction unit 300, or microcomputer 30 included in the reproduction unit 300 identifies, by means of information received from the microcomputer 20 of the processing unit 200 via an interface, whether the type of the received broadcast signal corresponds to, for example, the NTSC type or the PAL type. Thereafter, the microcomputer 30 compares the identified type of the broadcast signal with the stored video mode set data, thereby determining whether or not they correspond to each other in step S13.

When it is determined, based on the result of the comparison, that the identified broadcast signal type corresponds to the stored video mode set data, for example, where the identified broadcast signal type corresponds to, for example, the NTSC type, whereas the video mode set data stored in the memory unit 31 corresponds to, for example, the NTSC mode, the microcomputer 30 sets the signal processing mode for video signals read from the optical disc to, for example, the NTSC mode corresponding to the video mode set data stored in the memory unit 31.

On the other hand, when it is determined, based on the result of the comparison, that the identified broadcast signal type does not correspond to the stored video mode set data, for example, where the identified broadcast signal type corresponds to, for example, the NTSC type, whereas the video mode set data stored in the memory unit 31 corresponds to, for example, the PAL mode, the microcomputer 30 identifies whether or not the video mode set data has already been updated by a user.

For example, where the stored video mode set data is in a state of being added with an update flag, the microcomputer 30 determines that the video mode set data has been optionally set by the user. Based on this determination, the microcomputer 30 sets the signal processing mode for video signals read from the optical disc to, for example, the PAL mode corresponding to the video mode set data stored in the memory unit 31.

On the other hand, when there is no update flag added to the stored video mode set data, the microcomputer 30 determines that the video mode set data has not been optionally set by the user. Based on this determination, the microcomputer 30 updates the video mode set data stored in the memory unit 31 with data associated with, for example, the NTSC mode in step S16, and sets the signal processing mode for video signals read from the optical disc to, for example, the NTSC mode corresponding to the video mode set data newly stored in the memory unit 31 in accordance with the updating operation.

Thus, the signal processing mode for video signals is set to, for example, the NTSC or PAL mode corresponding to the detected broadcast signal type under the condition in which the video mode set data has not been optionally updated by the user, so that the reproduction unit automatically performs a signal processing operation corresponding to the mode of the display device, such as an external monitor or TV.

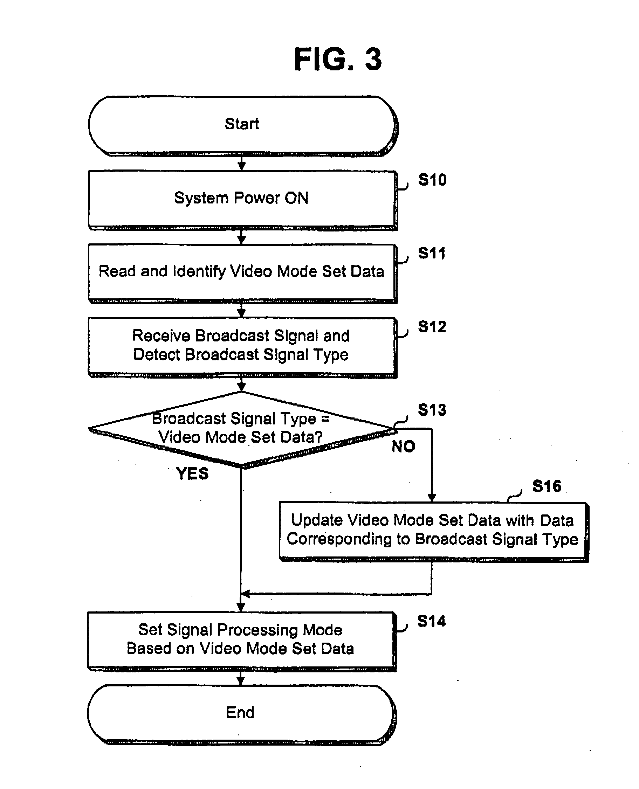

Meanwhile, the procedure for determining, in step S15, whether or not the video mode set data has been optionally updated by the user may be dispensed with, as shown in FIG. 3, in which like reference numerals have been utilized to identify like steps. In this case, when the detected broadcast signal type does not correspond to the video mode set data stored in the memory unit 31, the microcomputer 30 updates the video mode set data with data corresponding to the detected broadcast signal type, and sets the signal processing mode of the reproduction unit for reproduction of video signals to a mode corresponding to the detected broadcast signal type.

As is apparent from the above description, the invention provides a method and apparatus for automatically setting a signal processing mode for reproduction of video signals in a disc apparatus, such as an optical disc apparatus equipped with a tuner, such that the signal processing mode corresponds to the mode of a display device, such as an external monitor or TV, connected to the disc apparatus. Accordingly, it is unnecessary for the user to manually set the signal processing mode of the disc apparatus.

The foregoing embodiments and advantages are merely exemplary and are not to be construed as limiting the invention. The present teaching can be readily applied to other types of apparatuses. The description of the invention is intended to be illustrative, and not to limit the scope of the claims. Many alternatives, modifications, and variations will be apparent to those skilled in the art. In the claims, means-plus-function clauses are intended to cover the structures described herein as performing the recited function and not only structural equivalents but also equivalent structures.

## Claims

1. A method for setting a signal processing mode for reproduction of signals in a disc apparatus equipped with a tuner, comprising:
detecting the type of a broadcast signal received through the tuner;
comparing the detected broadcast signal type with mode set data stored in the disc apparatus to determine whether the detected broadcast signal type corresponds to the mode set data; and
setting the signal processing mode of the disc apparatus to a signal processing mode based on the result of the comparison.

2. The method according to claim 1, wherein the broadcast signal is a video broadcast signal.

3. The method according to claim 1 or 2, wherein the signal processing mode is one of an NTSC mode or a PAL mode.

4. The method according to any of claims 1 to 3, wherein setting the signal processing mode of the disc apparatus to a signal processing mode based on the result of the comparison comprises setting the signal processing mode of the disc apparatus to a mode corresponding to the mode set data when it is determined, based on the result of the comparison, that the detected broadcast signal type corresponds to the mode set data.

5. The method according to any of claims 1 to 3, wherein setting the signal processing mode of the disc apparatus to a signal processing mode based on the result of the comparison comprises:
updating the stored mode set data with data corresponding to the detected broadcast signal type; and
setting the signal processing mode of the disc apparatus to a mode corresponding to the detected broadcast signal type when it is determined, based on the result of the comparison, that the detected broadcast signal type does not correspond to the mode set data.

6. The method according to claim 5, wherein setting the signal processing mode of the disc apparatus to a signal processing mode based on the result of the comparison comprises setting the signal processing mode of the disc apparatus to a mode corresponding to the stored mode set data when it is determined, based on the result of the comparison, that the detected broadcast signal type does not correspond to the mode set data, when the mode set data has been updated by a user.

7. Apparatus for setting a video signal processing mode for reproduction of video signals in a disc apparatus equipped with a tuner, comprising:
means for detecting the type of a broadcast signal received through the tuner;
means for comparing the detected broadcast signal type with video mode set data stored in the disc apparatus to determine whether the detected broadcast signal type corresponds to the video mode set data; and
means for setting the signal processing mode of the disc apparatus to a video signal processing mode based on the result of the comparison.

8. The apparatus according to claim 7, wherein the broadcast signal is a video broadcast signal.

9. The apparatus according to claim 7 or 8, wherein the signal processing mode is one of an NTSC mode or a PAL mode.

10. The apparatus according to any of claims 7 to 9, wherein the means for setting the signal processing mode of the disc apparatus to a signal processing mode based on the result of the comparison comprises means for setting the signal processing mode of the disc apparatus to a mode corresponding to the mode set data when it is determined, based on the result of the comparison, that the detected broadcast signal type corresponds to the mode set data.

11. The apparatus according to any of claims 7 to 9, wherein the means for setting the signal processing mode of the disc apparatus to a signal processing mode based on the result of the comparison comprises:
means for updating the stored mode set data with data corresponding to the detected broadcast signal type; and
means for setting the signal processing mode of the disc apparatus to a mode corresponding to the detected broadcast signal type when it is determined, based on the result of the comparison, that the detected broadcast signal type does not correspond to the mode set data.

12. The apparatus according to claim 11, wherein the means for setting the signal processing mode of the disc apparatus to a signal processing mode based on the result of the comparison further comprises means for setting the signal processing mode of the disc apparatus to a mode corresponding to the stored mode set data when it is determined, based on the result of the comparison, that the detected broadcast signal type does not correspond to the mode set data, when the mode set data has been updated by a user.

13. A disc apparatus, comprising:
a receiver unit configured to receive a broadcast signal;
a processing unit configured to process the signal received by the receiver unit;
a reproduction unit configured to reproduce the signal, wherein the processing unit is further configured to detect a type of the broadcast signal received through the tuner, compare the detected broadcast signal type with stored mode set data to determine whether the detected broadcast signal type corresponds to the mode set data, and set the signal processing mode of the disc apparatus to a signal processing mode based on the result of the comparison.

14. The disc apparatus according to claim 13, further comprising a memory in which the mode set data is stored.

15. The disc apparatus according to claim 13 or 14, where in the disc apparatus comprises an optical disc apparatus.

16. The disc apparatus according to any of claims 13 to 15, wherein the broadcast signal is a video broadcast signal.

17. The disc apparatus according to any of claims 13 to 16, wherein the signal processing mode is one of an NTSC mode or a PAL mode.

18. The disc apparatus according to any of claims 13 to 17, wherein the reproduction unit comprises a DVD player unit.

19. The disc appatus according to any of claims 13 to 18, wherein the processing unit is further configured to set the signal processing mode of the disc apparatus to a mode corresponding to the mode set data when it is determined, based on the result of the comparison, that the detected broadcast signal type corresponds to the mode set data.

20. The disc apparatus according to any of claims 13 to 18, wherein the processing unit is further configured to update the stored mode set data with data corresponding to the detected broadcast signal type, and set the signal processing mode of the disc apparatus to a mode corresponding to the detected broadcast signal type when it is determined, based on the result of the comparison, that the detected broadcast signal type does not correspond to the mode set data.

21. The disc apparatus according to any of claims 13 to 18, wherein the processing unit is further configured to set the signal processing mode of the disc apparatus to a mode corresponding to the stored mode set data when it is determined, based on the result of the comparison, that the detected broadcast signal type does not correspond to the mode set data, when the mode set data has been updated by a user.
